# EUROPEAN PATENT APPLICATION

(11) **EP 1 225 268 A1**
(43) Date of publication of application: **24.07.2002**
(21) Application number: 01200164.0
(22) Date of filing: 17.01.2001
(51) Int. Cl.: D06M 15/11

(54) **Finishing agent**

(71) Applicant: Coöperatieve Verkoop- en Productievereniging van Aardappelmeel en Derivaten 'AVEBE' B.A., NL-9641 JA Veendam (NL)
(72) Inventor: The designation of the inventor has not yet been filed
(74) Representative: Prins, Adrianus Willem

(57) **Abstract**

The invention relates to a liquid finishing agent based on a degraded starch which is stabilized by a reducing agent. The invention further relates to a process for preparing said finishing agent and to its use in several applications, such as in finishing textile and blanket adhesives.

## Description

The invention relates to a finishing agent and to the use of said agent in various processes, particularly in the textile industry.

In a typical vertical textile operation, there are many operations and processes that need to be carried out to reach a final and finished fabric. These processes include the spinning of yarns, weaving or knitting of yarn into greige fabric, wet processing the fabric to prepare it for dyeing and printing and then finally finishing the fabric. Finishing of fabric can include many different types of finishes. This can be simply drying the fabric but more often than not, a specific finish is given to the fabric to impart a specific handle and/or functional property, e.g. flame proofing, water resistance, etc.. These finishes are normally applied in an aqueous medium by means of a padder or foulard. Once the fabric has passed through these units it is dried on a drying unit that is capable of drying and/or curing fabric at temperatures between 100 - 220°C.

Textile manufacturers use various additives to obtain a specific stiffer handle on fabrics. Polyvinyl acetates and starches are the most common polymers used to obtain a stiffer handle. In many cases these manufacturers also look to obtain a handle that is fuller and that gives a specific body. To obtain the latter effect one needs to use a finishing agent that gives limited stiffness but can substantially increase the mass per unit area. Here, dextrins are the most common finishing agents.

Finishing of textiles to obtain a specific stiffer, fuller handle is obtained with starches (oxidized starches, derivatized starches and dextrins), polyvinyl acetates and polyacrylates or a combination of all these and other products.

Today many textile mills have chosen to use automatic liquid dispensing systems to facilitate the measuring, preparation and dispensing of chemicals. It is not uncommon to find such dispensing system in, for example, dyehouses, at printers and finishers. These liquid dispensing systems require that the chemicals linked to such a system are liquid. The use of liquid dispensing systems makes the preparation of chemicals less time consuming, less labor intensive and ultimately can help prevent unnecessary wastage of chemicals. For this reason the finishing polymer used is preferably delivered to the manufacturing plant in liquid formulation. Until now, synthetic polymers such as polyvinyl acetates and polyacrylates could meet this requirement.

However, finishing agents based on polyvinyl acetates and polyacrylates have a number of disadvantages. They cannot be applied at high temperatures and are sensitive to alkaline conditions. Further, they have a masking effect with OBA's (optical brightening agents) and often foam excessively. Machines and apparatuses used in a process wherein polyvinyl acetates or polyacrylates are used as finishing agents prove difficult to clean. Polyvinyl acetates and polyacrylates further give a synthetic handle, are deemed not be environmentally friendly, give a relatively low fabric compacting possibility and settle out when mixed with water.

Generally, starch based finishing products are supplied as dry powders which, if to be used on liquid dispensing systems have to be dissolved prior to use. This is time and labor consuming, leading to a preferential usage of synthetic polymer solutions or dispersions. In this regard, reference is made to patent publications DE 3323570 and GB 2259094.

Attempts have been made to produce liquid starch based products in the past. These products have had several shortcomings.

Liquid starch based products containing a starch product in a concentration above 40% have been achieved with yellow dextrins. Yellow dextrins are stable in high concentrations, which is necessary to ensure shelf-life in the order of months, but have the disadvantage of being too dark in color. They can therefor not be applied to light colored, bright colored or white fabrics.

White dextrins give less discoloration but nevertheless have the tendency to discolor during the dissolving process which often involves pre-boiling to ensure complete solubility. They also tend to discolor during the drying/finishing operation. At concentrations above 30% they are increasingly unstable.

Oxidized starches have the disadvantage of having poor stability at high concentrations and varying conditions such as low temperatures that may occur during storage or transport. Even stabilized oxidized starches discolor during the dissolving process which often involves cooking. Thin boiling oxidized starches also result in yellowing during the drying and dissolution process.

In accordance with the invention, it is postulated that the discoloration of these products is a result of the presence of reducing ends in the starch product, which give rise to enol condensations leading to colored products upon heating.

In conclusion, existing starch based powder products have the following disadvantages:
- Using cook-up starches requires time and energy to pre-dissolve at customer premises
- Cook-up starches often cause yellowing during the cooking phase.
- Cold water soluble starches need time to fully dissolve.
- Cold water soluble starches usually have a too high viscosity.
- Cold water soluble and oxidized starches give too little body to the fabric.
- Oxidized starches and white dextrins are not stable in solution.
- Yellow dextrins are too dark in color.
- Cook-up starches tend to yellow during finishing at high temperatures (>100 °C).

The present invention provides a solution to these disadvantages. According to the invention a starch based liquid formulation can be achieved by preparation of a stabilized, degraded starch in which the color has been stabilized by elimination of the colorforming reducing ends of the starch product. The stability of the solution viscosity is preferably ensured by modification of the starch product with a suitable amount of one or more starch-substitution reagents (e.g. ethylene oxide, propylene oxide, acetic anhydride, monochloroacetate). Accordingly, the invention relates to a liquid finishing agent based on a degraded starch which is stabilized by a reducing agent.

A finishing agent according to the invention has all the advantages related to liquid finishing agents. Desired amounts of the finishing agent can be measured in a convenient manner. The finishing agent can further easily be blended with other compounds or compositions. Also, the processability, such as the pumpability, of a finishing agent according to the invention is very good. Other advantages of the invention will become clear from the following description of a number of embodiments of the invention.

A finishing agent process according to the invention, may in principle be based on any type of starch, such as starch from potato, tapioca, maize, wheat, barley and so forth. It is preferred, however, that a root or tuber starch is used. These types of starch generally contain lower amounts of lipids and proteins than cereal and fruit types of starch. Consequently, the risk of problems related to odor and foaming are reduced. Potato and tapioca starches have proven to be particularly suitable.

In a preferred embodiment, the starch comprises at least 95 wt.%, more preferably at least 98 wt.%, based on dry substance of starch, of amylopectin. Examples of starches that meet this requirement of amylopectin content are waxy maize starch, waxy wheat starch, amylopectin potato starch and amylopectin tapioca starch. It has been found that the use of these amylopectin-type starches leads to a finishing agent having very good properties.

As is mentioned above, a finishing agent according to the invention is based on a degraded starch. In a preferred embodiment, the starch is also etherified or esterified. The degradation and etherification or esterification of the starch may, in accordance with the invention, be carried out in any order, without substantially affecting the quality of the product that is prepared. It is preferred that the starch is degraded to achieve a viscosity of 500-1500 mPas at 20°C for the liquid finishing agent having a desired concentration. The starch is preferably stabilized to have a shelf life of at least 6 to 12 months. In addition, the liquid finishing agent thus obtained is preferably able to withstand at least one freeze-thaw cycle without substantially affecting the viscosity at 20°C.

The degradation of starch generally encompasses the reduction of both molecular weight and viscosity of the starch. A number of ways and reagents are known to reduce molecular weight and viscosity. These methods involve dry roasting, dextrinization, phosphorylation at elevated temperature, enzymatic conversion, acid hydrolysis or oxidation in solution, etc. For granular products in general acid degradation, enzymatic hydrolysis or oxidation are preferred. For acid degradation hydrogen chloride and sulfuric acid are the acids of choice, although other acids can be used. The oxidation of starch can be accomplished with a large number of agents such as ozone, potassium permanganate, hydrogen peroxide (with or without a catalyst) and sodium hypochlorite. The sodium hypochlorite oxidation of starch is preferred. For enzymatic degradation α-amylase, β-amylase, isoamylase, pullulanase, or glycosyltransferases may be employed. (For a review see Modified starches: properties and uses; O.B. Wurzburg, CRC Press, Boca Raton 1987, Chapter 2).

Degradation using sodium hypochlorite is preferably carried out in a suspension of granular starch under alkaline conditions, typically of pH 7-11, using an amount of hypochlorite suitable for achieving the desired viscosity. Degradation using an amylolytic enzyme is preferably carried out in a solution of starch, which starch optionally has previously been etherified, in water at a temperature and pH suitable for the chosen enzyme. The amount of enzyme used, the temperature and the reaction time are balanced to achieve the desired viscosity.

The extent to which the starch is degraded, may be expressed in terms of intrinsic viscosity. The intrinsic viscosity is expressed in dl/g and may be determined in any known manner, for instance as described by H.W. Leach in Cereal Chemistry, vol. 40, page 595 (1993) using an Ubbelohde viscometer and a 1M sodium hydroxide solution in water as a solvent. The intrinsic viscosity provides a measure for the molecular weight and thus for the extent of the degradation of the starch. It is preferred that the starch is degraded to yield a product having an intrinsic viscosity of at least 0.05 dl/g, more preferably at least 0.1 dl/g.

Etherification of starch may be performed with reagents containing a halo, halohydrin, epoxide or glycidyl group as reactive site. During etherification, a hydroxyalkyl, cationic and/or anionic group can be introduced in the starch.

The alkyl chain of a hydroxyalkylating agent may vary from 1 - 20 carbon atoms, preferably from 1-12 carbon atoms, more preferably from 1 - 4 carbon atoms. Examples of suitable hydroxyalkylating agents include ethylene oxide, propylene oxide, butylene oxide, glycidyl trimethylammonium chloride, allyl glycidyl ether, propyl glycidyl ether, butyl glycidyl ether, and combinations thereof. Preferably, propylene oxide is used to hydroxyalkylate the starch.

Etherification is preferably carried out in a solution of starch, that optionally has been degraded previously, in water under the influence of alkali, typically sodium hydroxide. The alkali and the etherification reagent are added to the starch solution and reacted at a suitable temperature, typically 30-90°C.

Esterification of starch may be performed in any conventional manner, e.g. with reagents containing a carboxylic anhydride, acid chloride, or similar activated carboxylic acid group. By esterification an alkyl ester group is introduced in the starch.

The esterifying reagent may be an anhydride of an alkyl carboxylic acid, where the alkyl chain is between 1-22 carbon atoms, preferably from 1-12 carbon atoms, more preferably from 1-4 carbon atoms. The anhydride may be a mixed anhydride of carboxylic acids with different lengths of alkyl chains. Examples of suitable esterifying agents include acetic anhydride, propionic anhydride, adipic/acetic mixed anhydride, acetyl chloride, lauryloic chloride and mixtures thereof. Also, cyclic anhydrides may be used such as succinic anhydride, alkyl succinic anhydrides or maleic anhydride. Preferably, acetic anhydride is used to esterify the starch.

Esterification is preferentially carried out in a suspension of starch, that has optionally already been degraded, in water under the influence of alkali, typically sodium hydroxide. The alkali and the reagent are added to the starch solution in such a manner that the pH is kept constant at pH 6 to 9.5 and reacted at a suitable temperature, typically 20-40 °C.

The etherified or esterified starch preferably has a degree of substitution (DS) of from 0.02 to 2.0, more preferably from 0.05 to 1.0, and even more preferably from 0.1 to 0.5.

In a preferred embodiment, the degraded starch, prepared as described above, is bleached. Bleaching can be performed using an oxidation reagent, such as an oxidation reagent that is described above. Preferred bleaching agents are sodium hypochlorite and hydrogen peroxide. If desired, the bleaching and degradation processes can be carried out simultaneously to a solution of an etherified starch.

If desired, the degraded starch is neutralized. The neutralization is intended e.g. to neutralize the effects of the presence of any alkaline materials left over of the alkaline induced etherification. Suitable acids depend on the intended application of the finishing agent and include mineral and organic acids, such as hydrochloric acid, sulfuric acid, acetic acid, citric acid, or phosphoric acid. The starch solution is preferably neutralized to a pH of between 5 and 7.

In accordance with the invention, a liquid finishing agent is provided. The term 'liquid' in this regard is intended to reflect that the degraded starch is dissolved or dispersed in an aqueous medium. In this regard, the term 'dispersing' is intended to refer to preparing a mixture of starch and water wherein the starch is in a substantially gelatinized state, as opposed to 'suspending' by which is meant preparing a mixture of starch and water wherein the starch is in a substantially non-gelatinized state.

Although the degradation and etherification or esterification reactions will often be carried out while the starch is already dissolved or dispersed in an aqueous medium, it is also possible to perform those reactions under dry or semi-dry conditions and to dissolve or disperse the starch product after performing the degradation and etherification or esterification reactions. Any conventional manner for dissolving or dispersing a starch product may be used in this regard. Examples of such manners include jet cooking, stirring in a heated reactor and open steam injection. The aqueous medium will preferably essentially be based on water, although it is possible that co-solvents are present. Examples of co-solvents include ethanol, propanol, ethylene glycol and propylene glycol. The ready liquid finishing agent will typically have a dry solids content of from 10 to 70 wt.%, preferably from 20 to 60 wt.%, based on the weight of the liquid finishing agent.

In accordance with the invention, a liquid finishing agent is stabilized by a reducing agent. In practice, this means that a reducing agent is added to the finishing agent in dissolved or dispersed state. Suitable examples of reducing agents include sulfites, bisulfites, sulfur dioxide, thiosulfates, nitrites and borohydrides. Preferred reducing agents are sodium bisulfite, sodium disulfite, sulfur dioxide, and disodium sulfite. These will generally be employed in amounts of from 0.01 to 25 wt.%, preferably from 0.1 to 10 wt.%, based on the weight of the degraded starch. Due to the use of the reducing agent, the color of the finishing agent is more stable, and, more importantly, the color of a product finished with the finishing agent is also more stable. More in particular, the product, such as textile or paper, substantially does not show any discoloration during drying at increased temperatures if it is finished with a finishing agent according to the invention.

In a preferred embodiment, a finishing agent according to the invention may further comprise any conventional additive, such as an optical brightening agent (OBA), a wetting agent, softening agent, or a preservative. Examples of suitable preservatives include low toxic and non-irritating preservatives, such as ortho-fenylfenol sodium salt or dichlorobenzylalcohol, which will typically be used in an amount of from 0.01 to 0.5 wt.%, based on the weight of the degraded starch.

Optionally, the thus obtained product, the finishing agent, is dried. The drying may be carried out with for instance a drum or spray drier. If a drying step is included in the preparation, the dried product will normally be redissolved or redispersed in an aqueous medium before use.

The present liquid finishing agent can be applied in the finishing of fabrics of 100% cellulose based fibers, synthetic (including polyester, polyamide,etc.) fibers and blends thereof.

A liquid finishing agent according to the invention can further be used as a printing blanket adhesive. In the textile trade, fabric is often printed on flat-bed or rotary printing machines. In both cases the printing operation is carried out on a continuous conveyer belt pre-treated with a sticky substance to ensure that the fabric is held in place during the printing operation. This ensures that in the case of multi-colored prints the outlines of each print fit perfectly into each other. Without this, there would be an overlapping of screens resulting in unacceptable prints. The most common glues for these printing blankets are thermoplastics, polyvinyl alcohols and starch. Thermoplastics are known as permanent glues whereas polyvinyl alcohols and starches are not permanent and are washed with each cycle. Some of the important factors for a suitable non-permanent printing glue is that it has a good sticking power, does not interfere with the printing inks, dyes and thickeners, does not discolor the fabric or leave excessive residues on the fabric and is easily removed from the fabric. It has a high sticking power without discoloring the fabric. It is easily removed from the blanket during the washing process and has a more favorable effect on effluent than its synthetic counter products.

The invention will now be further elucidated by the following, non-restrictive examples.

### Example 1

A stirred autoclave reactor was filled with a dispersion of 2000 g of hypochlorite oxidized potato starch and 2320 g water. To the mixture was added 290 g of propylene oxide and 160 g 25% sodium hydroxide. The temperature was raised to 70 °C and reaction was allowed to run for 60 minutes. Then, 60 ml 15% active chlorine bleach was added and stirring continued for 10 minutes until no active chlorine was detected. The solution was then neutralized with 90 ml 5 M sulfuric acid to pH 5.5 and 23.5 g of sodium bisulfite was added.

### Example 2

A stirred autoclave reactor was filled with a dispersion of 2000 g of potato starch and 2320 g water. To the mixture was added 290 g of propylene oxide and 160 g 25% sodium hydroxide. The temperature was raised to 75 °C and reaction was allowed to run for 60 minutes. The solution was then neutralized with 97 ml 5 M sulfuric acid to pH 7-7.5. Then, 2.5 g BAN 240 (alpha-amylase) was added and stirring continued for 60 minutes. Hydrolysis was stopped by addition of 5 g 30% hydrogen peroxide and 23.5 g of sodium bisulfite was added. Finally the pH was adjusted to 6.0 with 9 g 25% NaOH.

## Claims

1. A liquid finishing agent based on a degraded starch which is stabilized by a reducing agent.

2. A finishing agent according to claim 1, wherein the starch is degraded physically or chemically with an oxidizing agent, an acid or an amylolytic enzyme.

3. A finishing agent according to claim 1 or 2, wherein the starch is etherified or esterified.

4. A finishing agent according to claim 3, wherein the starch is etherified with an epoxide, such as ethylene oxide, propylene oxide, glycidyl trimethylammonium chloride or butyl glycidyl ether, or with acrylonitrile or an alkali metal monochloroacetate.

5. A finishing agent according to claim 3, wherein the starch is esterified with an anhydride, such as acetic anhydride or succinic anhydride, or with a vinyl acetate.

6. A finishing agent according to any of the preceding claims, wherein the starch is etherified or esterified to a degree of substitution (DS) of from 0.02 to 2.0, preferably from 0.05 to 1.0, more preferably from 0.1 to 0.5.

7. A finishing agent according to any of the preceding claims, wherein the reducing agent is chosen from the group of sulfites, bisulfites, sulfur dioxide, thiosulfates, nitrites and borohydrides.

8. A finishing agent according to any of the preceding claims, wherein the starch is stabilized with the reducing agent in an amount of 0.01-25 wt.%, preferably 0.1-0.5 wt.%, based on the weight of the degraded starch.

9. A finishing agent according to any of the preceding claims, wherein the starch is dissolved or dispersed in an aqueous medium in an amount of from 10 to 70 wt.%, preferably from 20 to 60 wt.%, based on the weight of the finishing agent.

10. A process for preparing a finishing agent according to any of the preceding claims, wherein the starch is degraded and etherified or esterified in any order, and wherein the starch is stabilized by dissolution of the degraded starch in an aqueous medium comprising a reducing agent.

11. Use of a finishing agent according to any of the claims 1-9 for finishing textile.

12. Use of a finishing agent according to any of the claims 1-9 as a printing blanket adhesive.

13. Use of a finishing agent according to any of the claims 1-9 as a carrier for an optical brightening agent.
